# FASCICULE DE BREVET EUROPEEN

(11) **EP 1 807 895 B1**
(45) Date de publication et mention de la délivrance du brevet: **08.04.2009**
(21) Numéro de dépôt: 05815532.6
(22) Date de dépôt: 26.10.2005
(51) Int. Cl.: H01M 8/02, H01M 8/24

(54) **MODULE DE PILE A COMBUSTIBLE A INTERCONNECTEURS FLEXIBLES**
BRENNSTOFFZELLENMODUL MIT FLEXIBLEN ZWISCHENVERBINDERN
FUEL CELL MODULE PROVIDED WITH FLEXIBLE INTERCONNECTORS

(30) Priorité: 02.11.2004 FR 0452496
(43) Date de publication de la demande: 18.07.2007
(73) Titulaire: COMMISSARIAT A L'ENERGIE ATOMIQUE, 75015 Paris (FR)
(72) Inventeur: GALLET, Damien, F-84000 AVIGNON (FR); SARRO, Jean-Luc, F-07700 BOURG SAINT ANDEOL (FR); BLEIN, Franck, F-37550 SAINT AVERTIN (FR)
(74) Mandataire: Poulin, Gérard
(86) Numéro de dépôt international: PCT/FR2005/050905
(87) Numéro de publication internationale: WO 2006/048573

(56) Documents cités:
- PATENT ABSTRACTS OF JAPAN vol. 014, no. 255 (E-0935), 31 mai 1990 (1990-05-31) & JP 02 075167 A (MITSUI ENG & SHIPBUILD CO LTD; others: 01), 14 mars 1990 (1990-03-14)
- PATENT ABSTRACTS OF JAPAN vol. 1996, no. 06, 28 juin 1996 (1996-06-28) & JP 08 050914 A (FUJIKURA LTD), 20 février 1996 (1996-02-20)
- PATENT ABSTRACTS OF JAPAN vol. 014, no. 089 (E-0891), 19 février 1990 (1990-02-19) & JP 01 298647 A (MITSUBISHI HEAVY IND LTD; others: 01), 1 décembre 1989 (1989-12-01)
- PATENT ABSTRACTS OF JAPAN vol. 018, no. 458 (E-1596), 25 août 1994 (1994-08-25) & JP 06 150949 A (NKK CORP), 31 mai 1994 (1994-05-31)

## Description

### Domaine de l'invention

L'invention concerne les piles à combustible et, en particulier, celles fonctionnant à haute température et étant du type SOFC (Solid Oxyde Fuel Cell), mais peut également s'appliquer à d'autres familles de piles à combustible, ainsi qu'aux électrolyseurs.

### Art antérieur et problème posé

Les piles du type SOFC fonctionnent avec de l'oxygène et de l'hydrogène en guise de combustible, ou avec un autre gaz combustible, par exemple du type du méthane, et à une température comprise entre 500 et 1 000°C. Ces piles sont constituées d'un empilement de plusieurs cellules élémentaires reliées par des éléments de connexion, tels que des interconnecteurs ou des plaques bipolaires. Les cellules élémentaires sont constituées d'un empilement d'une cathode, un électrolyte et d'une anode. La température élevée est nécessaire pour obtenir une conductivité suffisante de l'électrolyte en ions O²⁻.

Plusieurs types d'architectures régissent la conception de ces piles à combustible ; on en compte quatre principaux qui sont les suivants :
- architecture tubulaire ;
- architecture monolithique ;
- architecture en bande ;
- architecture plane.

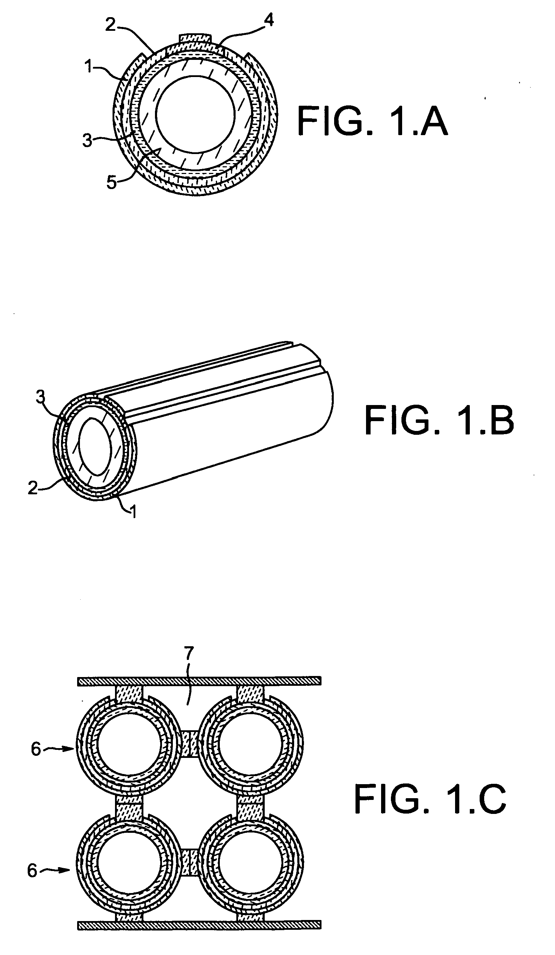

En référence aux figures 1A, 1B et 1C, l'architecture tubulaire est largement connue. Elle se présente sous la forme d'un tube fermé ou non à une extrémité (voir figure 1B). Comme le montre la figure 1C, plusieurs cellules 6 sont placées à l'intérieur d'une chambre 7 et sont connectées en série et/ou en parallèle. L'oxygène est injecté au moyen d'un tube interne au fond de chaque cellule et progresse le long d'une cathode 3 en traversant un tube support 5 sur lequel elle est placée. Le deuxième combustible est injecté à l'extérieur de la cellule, dans la chambre principale 7 et est donc en contact avec une anode 1 se trouvant sur la surface externe d'un électrolyte 2, lui-même de forme tubulaire puisque placé sur la cathode. La cathode est reliée à un connecteur 4 placé également sur la surface extérieure de l'électrolyte 2. Les gaz résiduels sortent et sont éventuellement mélangés dans une chambre de combustion qui permet le préchauffage du premier gaz entrant.

Dans une telle configuration, aucune étanchéité n'est à gérer. La tenue mécanique de la cellule est assurée par le tube support qui est poreux pour que l'oxygène puisse le traverser et diffuser vers la cathode. Il a été envisagé ensuite de supprimer ce tube support et que la cathode assure la tenue mécanique de l'ensemble.

Une fois connectées entre elles en série, les cellules permettent d'obtenir un voltage souhaité entre des plaques collectrices de courant. La connexion des cellules sur la figure 1C est en parallèle et permet d'obtenir la puissance désirée.

Plusieurs inconvénients sont relatifs à cette structure tubulaire et sont les suivants :
- les lignes de courant sont longues, car le courant doit parcourir longitudinalement (voir figure 1C) les demi-tubes ; les pertes ohmiques sont donc élevées ;
- la fabrication des tubes est complexe et coûteuse ;
- les performances volumiques sont faibles, compte tenu de l'espace perdu entre les cellules ; et
- le gradient thermique dans la longueur des tubes, dû à l'épuisement des gaz réactifs, est fortement préjudiciable à la tenue mécanique de ces derniers.

Plusieurs techniques permettent d'améliorer la tenue mécanique de cette structure tubulaire et sont les suivantes :
- réduction de la taille des tubes pour réduire les contraintes ;
- réduction du gradient thermique par l'injection des gaz à différents niveaux ; et
- renforcement du tube support.

D'autre part, la réduction de la longueur des lignes de courant peut être obtenue également par :
- la réduction de la résistance interne de la pile, ce qui implique une puissance plus élevée ;
- la réduction des pertes par polarisation dans les électrodes par l'amincissement de l'anode rendue possible par la présence de ponts ;
- une meilleure compacité due à la forme cylindrique aplatie ; et
- la suppression du tube d'alimentation en air.

Toutefois, toutes ces architectures ne répondent que partiellement aux inconvénients principaux, qui sont la mauvaise compacité et les pertes ohmiques élevées dues à la longueur des lignes de courant.

L'architecture plane est très répandue. L'empilement, donc plan, est constitué de deux plaques bipolaires prenant en sandwich un empilement constitué successivement d'une anode, d'un électrolyte et d'une cathode. Les plaques bipolaires font office de connecteurs et possèdent également des canaux de circulation orientés, par exemple, perpendiculairement pour organiser une circulation croisée des deux combustibles. L'alimentation et l'évacuation des gaz se fait par des boîtiers disposés sur les quatre faces latérales de l'empilement.

Les lignes de courant se trouvent réduites par le fait que le courant n'a qu'à traverser les couches dans leur épaisseur. De plus, la compacité de cette structure lui confère un avantage certain. Par contre, les problèmes d'étanchéité sont plus importants que dans le cas de l'architecture tubulaire et doivent être gérés sur les quatre faces latérales de l'empilement des cellules, afin d'assurer le parcours de chacun des gaz entre les phases d'entrée et de sortie, ainsi que leur séparation. Ceci est dû au fait que les électrodes sont poreuses. De plus, l'étanchéité doit être assurée sur le pourtour des quatre boîtiers.

Les documents JP 02 075167, JP 08 050914 et JP 01 298647 décrivent des modules de piles à combustibles. Ces modules sont formés par insertion d'une pile à combustible cylindrique à l'intérieur d'une autre pile à combustible cylindrique, la deuxième pile ayant un diamètre plus grand que la première. Le document JP 06 150949 divulgue une pile à combustible cylindrique au centre de laquelle un tube est insérée. Ce tube est en contact électrique avec la cathode de la pile à combustible par l'intermédiaire d'un contacteur.

En référence à la figure 1, un concept plus récent d'architecture présente une géométrie coaxiale qui allie les avantages de la structure plane à ceux de la structure tubulaire. En effet, elle présente une grande compacité, les pertes ohmiques sont très réduites et elle présente des facilités quant à la mise en oeuvre de l'étanchéité de l'ensemble. Le module représenté sur cette figure 1 est l'empilement de plusieurs cellules élémentaires de piles à combustible. En effet, chaque cellule élémentaire est prise en sandwich en deux interconnecteurs 4 concentriques et est composée de successivement une anode 1, un électrolyte 2 et une cathode 3. A l'exception des interconnecteurs 4 d'extrémités, les autres sont communs à deux cellules élémentaires adjacentes. Un tel empilement se complète de deux boîtiers de distribution des gaz combustibles placés aux deux extrémités (non représentés sur cette figure).

Or, le matériau actuellement utilisé pour constituer de tels interconnecteurs 4 est une céramique du type chromite de lanthane, qui est très coûteuse. De plus, les interconnecteurs de ce type sont souvent déposés par projection par plasma, lors d'une unique série de projections des différentes couches successives constitutives de chaque cellule élémentaire. Or, il est prévu de pouvoir fabriquer indépendamment les différents éléments constitutifs de ce type de piles, tout en gardant cette architecture coaxiale. Plus précisément, il est indispensable de permettre l'assemblage des différentes cellules élémentaires coaxiales, à savoir un empilement d'une anode, d'un électrolyte et d'une cathode, fabriquées indépendamment les unes des autres. De plus, il est indispensable de pouvoir assurer la liaison électrique en série de ces cellules et de permettre la circulation et la séparation des gaz combustibles. Enfin, on a toujours le souci de limiter les efforts mécaniques sur les différentes cellules élémentaires qui sont plus ou moins en céramique et en contact, à froid et à chaud.

Le but de l'invention est donc de remédier à ces inconvénients en proposant une conception différente des interconnecteurs de ce type de module de piles à combustible.

### Résumé de l'invention

A cet effet, un premier objet principal de l'invention est un module de pile à combustible composé de cellules élémentaires à géométrie tubulaire, chaque cellule étant constituée d'un empilement de base concentrique comprenant une anode, un électrolyte et une cathode et entourée de deux interconnecteurs, le module étant constitué d'un empilement concentrique de plusieurs cellules concentriques et complété de chaque côté d'un dispositif de distribution et d'échappement de gaz combustibles, à savoir une bride et une base.

Dans le but de les doter d'une élasticité permettant une déformation radiale de l'ensemble, les interconnecteurs possèdent une cloison centrale sur laquelle son fixées au moins une collerette métallique, flexible échancrée et s'écartant de la cloison de façon inclinée.

Dans la réalisation principale, on prévoit que la section du module est cylindrique.

De plus, il est prévu que les boîtiers de distribution possède des moyens d'alimentation en gaz combustibles de deux sortes.

Dans une réalisation principale de la base, on prévoit que les moyens d'alimentation comprennent au moins deux canaux radiaux débouchant sur le côté de la base, et sur une face de l'empilement, par l'intermédiaire d'orifices de distribution destinés à alimenter les électrodes des cellules élémentaires.

Un tel module peut se compléter par l'utilisation de bandes de laine céramique du côté de la cathode entre les collerettes et la cloison centrale des interconnecteurs et de bandes de feutre de nickel du côté de l'anode.

### Liste des figures

L'invention, ses différentes caractéristiques et réalisations seront mieux comprises à la lecture de la description détaillée suivante, qui est accompagnée de plusieurs figures représentant respectivement :
- figures 1A, 1B et 1C, un premier type de structure de base de piles à combustible selon l'art antérieur ;
- figure 2, en vue partielle cavalière, le type de structure d'empilement d'un module de géométrie coaxiale ;
- figure 3, en vue cavalière, la moitié d'un interconnecteur utilisé dans le module selon l'invention ; et
- figure 4, en vue cavalière coupée, un module selon l'invention.

### Description détaillée d'une réalisation de l'invention

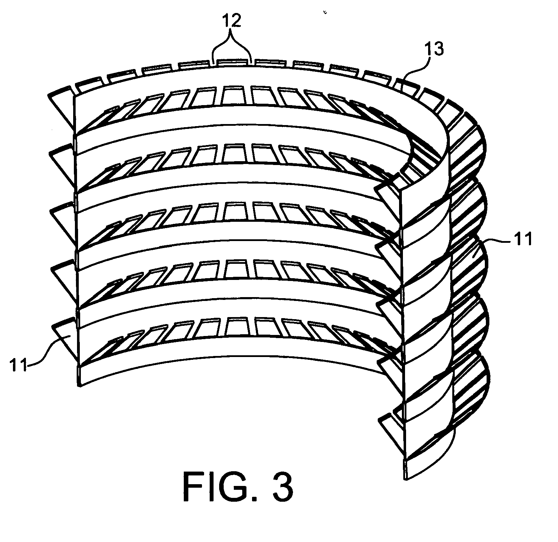

La figure 3 représente la moitié d'un interconnecteur utilisé entre deux cellules élémentaires dans le module de piles à combustible selon l'invention. La structure de celui-ci est composée principalement d'une cloison centrale 13 constituée d'une plaque plane métallique mise en demi-cylindre, par roulage ou profilage. Sur chacune de ces faces, sont fixées de façon espacée des collerettes 11 de manière à partir en saillie de part et d'autre de la cloison étanche 13, de façon inclinée, en tout cas pas de façon perpendiculaire à celle-ci. De plus, chaque collerette 11 possède à son extrémité des échancrures 12 formant des lamelles. En coopération avec le caractère plus ou moins élastique de la plaque métallique constituant chaque collerette 11, les échancrures 12 permettent aux collerettes 11 de présenter une élasticité dans le sens radial qui est utilisée dans le montage du module. De plus, cette élasticité permet à chaque interconnecteur d'assurer le contact électrique avec les électrodes avec lesquelles il est en contact. Ainsi, les jeux pourront être ajustés, lors du montage du module, afin de permettre ce montage et d'assurer le contact électrique, entre les différents éléments, et en particulier à chaud. De plus, ce type d'interconnecteur permet également de limiter les contraintes sur les cellules élémentaires du module, lors des dilatations thermiques.

Il est envisagé d'utiliser un alliage à base de nickel ou un superalliage pour constituer les interconnecteurs. Les dimensions à froid de ceux-ci sont déterminées de façon à obtenir un effort suffisant sur les électrodes adjacentes, afin d'assurer un bon contact électrique par l'intermédiaire des lamelles formées par chaque échancrure 12, sans risque de fluage de celle-ci, ni risque de ruine des cellules élémentaires du module et afin d'équilibrer les efforts à chaud sur chaque cellule élémentaire.

Afin de limiter l'éventuel problème de corrosion des contacts des interconnecteurs, ceux-ci peuvent être revêtus, du côté de la cathode, au moyen du matériau constituant cette dernière, ou tout autre matériau assurant cette fonction. De plus, afin de limiter les pertes électroniques à l'interface de ces deux éléments, on peut plaquer un grillage ou effectuer un revêtement métallique conducteur sur la cathode.

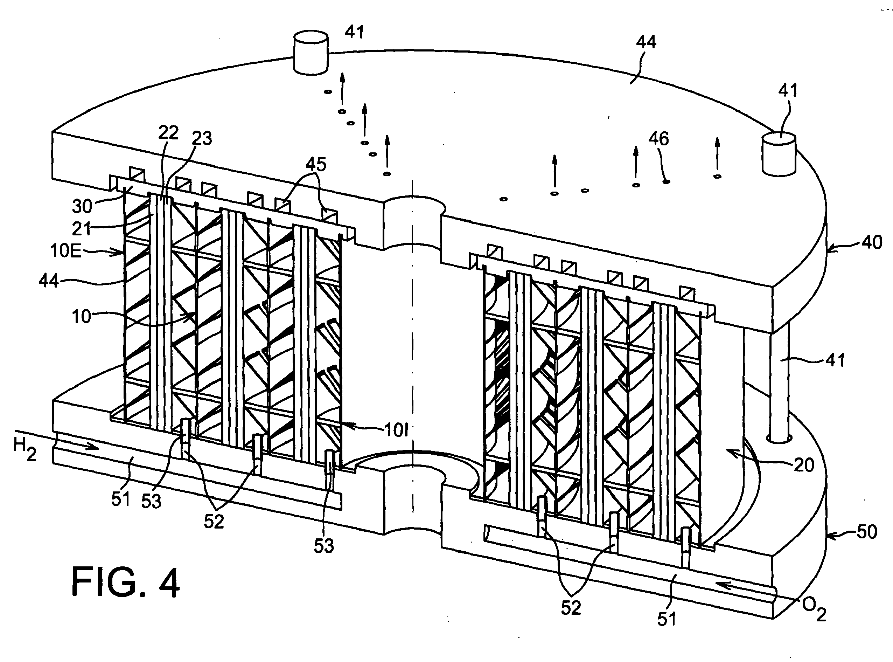

En référence à la figure 4, le module selon l'invention comprend les principaux éléments suivants : une base 50 sur laquelle est placé un empilement 20 qui sera détaillé ultérieurement, surmonté d'une bride 40. La bride 40 et la base 50 constituent des dispositifs de distribution et d'échappement comprenant des moyens d'alimentation et d'évacuation des gaz.

La base 50 possède deux canaux radiaux 51 recevant respectivement les deux gaz, à savoir de l'hydrogène et de l'oxygène sous force d'air. Des orifices de distribution 52, débouchant dans ces deux canaux radiaux 51, débouchent également en regard du module 20. Ainsi, les deux gaz peuvent être distribués vers chaque cellule élémentaire.

Un joint, par exemple un joint du type joint verre, est déposé sur la surface supérieure de la base 50, afin d'assurer l'étanchéité à ce niveau. Des tubes capillaires 53, métalliques, sont emmanchés dans les orifices de distribution 52, afin d'éviter leur obstruction par le verre, lors de la mise en place de celui-ci.

La surface inférieure de l'empilement 20 est en contact avec le joint placé sur la surface supérieure de la base 50.

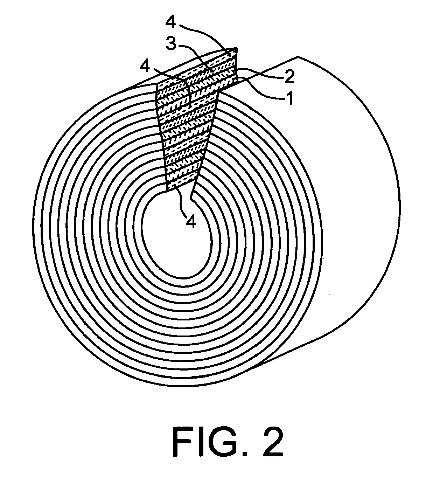

L'empilement 20 de cellule élémentaire de pile à combustible a donc une structure concentrique, telle que décrite à la figure 2. Toutefois, les interconnecteurs tels que décrits à la figure 2 sont utilisés entre les cellules élémentaires. En effet, ce module 20 est constitué à sa périphérie d'un interconnecteur externe 10E et en son centre d'un interconnecteur interne 10I. Chacun de ces deux interconnecteurs 10E et 10I est en contact avec une cellule élémentaire comprenant elle-même un empilement d'une anode 21, d'un électrolyte 22 et d'une cathode 23. Les autres interconnecteurs 10 sont placés entre deux cellules élémentaires adjacentes.

On note que les orifices de distribution 52 de la base 50 débouchent dans les espaces libres entre les interconnecteurs 10E et 10I et les cellules élémentaires.

Ainsi, on constate que les interconnecteurs 10, 10E et 10I, assurent les fonctions de contacts électriques et de séparation des deux gaz combustibles.

Si on ne désire pas multiplier le nombre des orifices d'alimentation 52 et de leur tube capillaire 53, il est très avantageux de disposer entre chaque cathode 23 et l'interconnecteur 10, 10I qui lui fait face, un feutre ou une laine céramique. De même, entre chaque anode 21 et l'interconnecteur 10E, 10 qui lui fait face, on peut disposer un feutre de nickel, afin de créer une perte de charge. Ainsi, les gaz combustibles pourront se répartir uniformément sur la circonférence des anode 21 et cathode 23, sans avoir à multiplier le nombre de points d'alimentation en gaz combustibles.

Entre la surface supérieure de l'empilement 20 et la surface inférieure de la bride 40, on insère un disque de laine céramique 30 qui, une fois compressée, absorbe les différences de dilatations, créé une perte de charge suffisante, afin d'assurer une étanchéité relative entre les espaces entre les interconnecteurs 10, 10E et 10I et les cellules élémentaires. Enfin, il permet d'éviter le retour des gaz résiduels à l'intérieur de l'empilement 20.

La bride 40 est conçue en zircone. Elle comprend des chambres annulaires 45 usinées dans sa surface inférieure, dans le but de collecter de façon indépendante les gaz résiduels, afin de les canaliser à l'extérieur ou vers un autre module de pile à combustible. Une deuxième option consiste à brûler ces gaz résiduels en sortie du module, afin de réchauffer les circuits des gaz combustibles entrants. Ainsi, une matière fibreuse, par exemple de la laine de céramique, peut être disposée dans les sorties de gaz résiduels de la bride 40 pour évacuer ceux-ci sans rétrodiffusion de la flamme à l'intérieur du module. L'autre solution consiste à laisser échapper ces gaz résiduels par des orifices de sortie 46, qui relient les canaux annulaires 45 à la surface supérieure 44 de la bride 40.

L'ensemble du module est maintenu grâce à des tirants 41 qui resserrent la bride 40 vers la base 50, l'empilement 20 étant pris en sandwich.

Le collectage du courant électrique se fait aux bornes du module, c'est-à-dire sur les interconnecteurs interne 10I et externe 10E.

## Revendications

1. Module de pile à combustible composé de cellules élémentaires à géométrie tubulaire, chaque cellule étant constituée d'un empilement de base concentrique comprenant une anode (21), un électrolyte (22) et une cathode (23), et entourée de deux interconnecteurs (10, 10E, 10I) le module étant constitué d'un empilement concentrique (20) de plusieurs cellules concentriques et complété de chaque côté d'un dispositif de distribution et d'échappement, à savoir une base (50) et une bride (40),
**caractérisé en ce que** les interconnecteurs (10, 10E, 10I) possèdent une cloison centrale (13) sur laquelle sont fixées au moins une collerette métallique (11) flexible, échancrée et s'écartant de la cloison centrale (13) de façon inclinée.

2. Module selon la revendication 1, **caractérisé en ce que** sa section est cylindrique.

3. Module selon la revendication 1, **caractérisé en ce que** les boîtiers de distribution et d'échappement, à savoir la bride (40) et la base (50) possèdent des moyens d'alimentation en gaz combustibles.

4. Module selon la revendication 3, **caractérisé en ce que** les moyens d'alimentation de la base (50) sont constitués d'au moins deux canaux radiaux (51) débouchant sur une face de l'empilement (20) par l'intermédiaire d'orifices de distribution (52) destinés à alimenter les électrodes, à savoir les anodes (21) et les cathodes (23) des cellules élémentaires.

5. Module selon la revendication 1, **caractérisé en ce qu'**il comprend des bandes de laine de céramique du côté des cathodes (23) entre les collerettes (11) et la cloison centrale (13) des interconnecteurs (10, 10I) et des bandes de feutre de nickel du côté des anodes (21) entre les collerettes (11) et la cloison centrale (13) des interconnecteurs (10, 10E).

6. Module selon la revendication 3, **caractérisé en ce que** les moyens d'alimentation de la bride (40) sont constitués par des canaux annulaires (45) sur la surface en regard de l'empilement (20) et des orifices de sortie (46) sur une surface externe (44) et débouchant dans les canaux annulaires (45) pour la sortie des gaz résiduels.

7. Module selon la revendication 1, **caractérisé en ce qu'**il comprend un disque de laine céramique (30) compressé entre l'empilement (20) et la bride (40).

8. Module selon la revendication 4, **caractérisé en ce qu'**il comprend des tubes capillaires (53) emmanchés dans des orifices d'entrée (52) de la base (50).

9. Module selon la revendication 1, **caractérisé en ce qu'**il comprend un joint sur la surface supérieure de la base (50) et placé en regard de l'empilement (20).

10. Module selon la revendication 1, **caractérisé en ce que** les collerettes (11) sont revêtues, du côté des cathodes (23), du matériau dont sont constituées les cathodes (23).

## Claims

1. Fuel cell module formed of elementary cells having tubular geometry, each cell consisting of a stack with concentric base containing an anode (21), an electrolyte (22) and a cathode (23), and surrounded by two interconnects (10,10E,10I) the module consisting of a concentric stack (20) of several concentric cells and completed on each side by a distribution and exhaust device namely a base (50) and a flange (40).
**characterized in that** the interconnects (10,10E,10I) have a central partition (13) on which at least one flexible metal collar (11) is flanged that is notched and lies at an angle away from the central partition (13).

2. Module according to claim 1 **characterized in that** its section is cylindrical.

3. Module according to claim 1, **characterized in that** the distribution and exhaust manifolds, namely the flange (40) and base (50), have means to supply combustible gases.

4. Module according to claim 3, **characterized in that** the supply means of the base (50) consist of at least two radial channels (51) opening onto one face of the stack (20) via distribution orifices (52) intended to supply the electrodes, namely the anodes (21) and the cathodes (23) of the elementary cells.

5. Module according to claim 1, **characterized in that** it comprises strips of ceramic wool on the side of the cathodes (23) between the collars (11) and the central partition (13) of interconnects (10,10I), and strips of nickel felt on the side of the anodes (21) between the collars (11) and the central partition (13) of interconnects (10,10E).

6. Module according to claim 3, **characterized in that** the supply means of the flange (40) consist of two annular channels (45) on the surface facing the stack (20) and of outlet orifices (46) on an outer surface (44), and leading into annular channels (45) to exhaust residual gases.

7. Module according to claim 1, **characterized in that** it comprises a ceramic wool disk (30) compressed between the stack (20) and the flange (40).

8. Module according to claim 4**, characterized in that** it comprises capillary tubes (53) fitted into inlet orifices (52) of the base (50).

9. Module according to claim 1, **characterized in that** it comprises a seal on the upper surface of the base (50) and positioned facing the stack (20).

10. Module according to claim 1, **characterized in that** the collars (11), on the side of the cathodes (23), are coated with the material of which the cathodes (23) are made.

## Patentansprüche

1. Brennstoffzellenmodul aus Elementarzellen von röhrenförmiger Geometrie, wobei jede Zelle durch einen Stapel mit konzentrischer Basis gebildet wird, der eine Anode (21), einen Elektrolyten (22) und eine Kathode (23) umfasst und von zwei Zwischenverbindern (10, 10E, 10I) umschlossen ist, wobei der Modul durch einen konzentrischen Stapel (20) aus mehreren konzentrischen Zellen gebildet und auf jeder Seite durch eine Zu- und Ableitvorrichtung, nämlich eine Grundplatte (50) und einen Flansch (40), vervollständigt wird, **dadurch gekennzeichnet, dass** die Zwischenverbinder (10, 10E, 10I) eine zentrale Zwischenwand (13) besitzen, in der wenigstens ein flexibler metallischer Kragen (11) befestigt ist, der ausgeschnitten bzw. gezähnt ist und sich schräg von der zentralen Wand (13) abspreizt.

2. Modul nach Anspruch 1, **dadurch gekennzeichnet, dass** sein Querschnitt zylindrisch ist.

3. Modul nach Anspruch 1, **dadurch gekennzeichnet, dass** die Zu- und Ableitgehäuse, nämlich der Flansch (40) und die Grundplatte (50), Einrichtungen zur Versorgung mit brennbaren Gasen umfassen.

4. Modul nach Anspruch 3, **dadurch gekennzeichnet, dass** die Versorgungseinrichtungen der Grundplatte (50) durch wenigstens zwei radiale Kanäle (51) gebildet werden, die mittels Verteilöfifinungen (52) auf einer Seite des Stapels (20) münden, dazu bestimmt, die Elektroden zu versorgen, nämlich die Anoden (21) und die Kathoden (23) der Elementarzellen.

5. Modul nach Anspruch 1, **dadurch gekennzeichnet, dass** er auf der Seite der Kathoden (23) Keramikwollstreifen umfasst, zwischen den Kragen (11) und der zentralen Zwischenwand (13) der Zwischenverbinder (10, 10I), und auf der Seite der Anoden (21) Nickeifilzstreifen, zwischen den Kragen (11) und der zentralen Zwischenwand (13) der Zwischenverbinder (10, 10E).

6. Modul nach Anspruch 3, **dadurch gekennzeichnet, dass** die Versorgungseinrichtungen im Flansches (40) durch Ringkanäle (45) auf der dem Stapel (20) gegenüberstehenden Seite und - für den Austritt des restlichen Gases - durch in den Ringkanälen (45) mündende Ausgangsöffnungen (46) in einer Außenoberfiläche (44) gebildet werden

7. Modul nach Anspruch 1, **dadurch gekennzeichnet, dass** er eine zwischen dem Stapel (20) und dem Flansch (40) zusammengepresste Keramikwolle-Scheibe (30) umfasst.

8. Modul nach Anspruch 4, **dadurch gekennzeichnet, dass** er in Eingangsöffnungen (52) der Grundplatte (50) steckende Kapillarröhrchen (53) umfasst.

9. Modul nach Anspruch 1, **dadurch gekennzeichnet, dass** er auf der dem Stapel (20) gegenüberstehenden Oberfläche der Grundplatte (50) eine Dichtung aufweist.

10. Modul nach Anspruch 1, **dadurch gekennzeichnet, dass** die Kragen (11) auf der Kathodenseite mit dem die Kathoden (23) bildenden Material beschichtet sind.
